# EUROPÄISCHE PATENTSCHRIFT

(11) **EP 2 113 344 B1**
(45) Veröffentlichungstag und Bekanntmachung des Hinweises auf die Patenterteilung: **15.08.2018**
(21) Anmeldenummer: 09005901.5
(22) Anmeldetag: 28.04.2009
(51) Int. Cl.: B25J 9/16

(54) **Verfahren und Vorrichtung zur Überwachung eines Manipulators**
Method and device for monitoring a manipulator
Procédé et dispositif de surveillance d'un manipulateur

(30) Priorität: 30.04.2008 DE 102008021671
(43) Veröffentlichungstag der Anmeldung: 04.11.2009
(73) Patentinhaber: KUKA Deutschland GmbH, 86165 Augsburg (DE)
(72) Erfinder: Hasenzahl, Torsten, 89407 Dillingen (DE)
(74) Vertreter: Schlotter, Alexander Carolus Paul

(56) Entgegenhaltungen:
- EP-A1- 0 798 895
- EP-A2- 1 038 640
- EP-A2- 1 186 386
- WO-A1-2007/085330
- DE-A1- 10 324 627
- US-A- 5 587 931
- NOTASH L ET AL: "Sensor fault detection for fault tolerant operation of parallel manipulators" SYSTEMS, MAN AND CYBERNETICS, 1995. INTELLIGENT SYSTEMS FOR THE 21ST C ENTURY., IEEE INTERNATIONAL CONFERENCE ON VANCOUVER, BC, CANADA 22-25 OCT. 1995, NEW YORK, NY, USA,IEEE, US, Bd. 3, 22. Oktober 1995 (1995-10-22), Seiten 2639-2644, XP010194663 ISBN: 978-0-7803-2559-3

## Beschreibung

Die vorliegende Erfindung betrifft ein Verfahren und eine Vorrichtung zur Überwachung einer Sicherheitsfunktion eines Manipulators, insbesondere eines Roboters, und zum Stillsetzen des Manipulators, wenn die überwachte Sicherheitsfunktion nicht erfüllt ist.

Um einen sicheren Betrieb eines Manipulators zu gewährleisten, ist es bekannt, eine oder mehrere Sicherheitsfunktionen zu überwachen, insbesondere Funktionen, die so definiert sind, dass sie erfüllt sind, solange der Betrieb des Manipulators fehlerfrei abläuft. Gerade wenn Manipulatoren mit Menschen interagieren, müssen Sicherheitsfunktionen überwacht werden, um eine Verletzung des Menschen durch den Manipulator zu verhindern. So überwacht eine Sicherheitsüberwachung, beispielsweise ob ein Manipulator sich höchstens innerhalb eines vorgegebenen Toleranzbereiches bewegt. Verlässt der Manipulator diesen Toleranzbereich, besteht die Gefahr, dass er einen in der Nähe stehenden Menschen verletzt. Daher setzt die Sicherheitsüberwachung den Manipulator in einem solchen Fall still. Die EP 0 798 895 A1 schlägt allgemein eine Busfehler-Erkennung vor, die US 5,587,931 A eine Werkzeugüberwachung, die einen Alarm ausgibt, wenn ein Werkzeug fehlt.

Wenn im Manipulator selber eine Fehlfunktion auftritt und infolgedessen eine oder mehrere solcher Sicherheitsfunktionen nicht mehr erfüllt sind, soll der Manipulator zuverlässig stillgesetzt werden. Da bei einer Fehlfunktion des Manipulators nicht mehr sicher davon ausgegangen werden kann, dass beispielsweise Steuerung bzw. Regelung oder Antriebe des Manipulators korrekt funktionieren, wird üblicherweise eine Energieversorgung von Antrieben des Manipulators unverzüglich unterbrochen, so dass der Manipulator reibungsbedingt oder durch einfallende mechanische Bremsen zum Stillstand kommt. Auf diese Weise ist auch bei einem Manipulator mit Fehlfunktion ein Stillsetzen gewährleistet.

Ein solches Stillsetzen unter unmittelbarer Unterbrechung der Energieversorgung weist jedoch einige Nachteile auf: zum einen erfolgt die Stillsetzung hier in der Regel nicht bahntreu, i.e. der Manipulator weicht während des Abbremsens von seiner Sollbahn bzw. -position ab. Dementsprechend muss er- nach Behebung der Fehlfunktion - aufwändig auf die korrekte Bahn bzw. Position zurückpositioniert werden, was Zeit und Aufwand erfordert. Zum anderen können Antriebe, die nicht mehr mit der Energieversorgung verbunden sind, nicht oder nur eingeschränkt zum Abbremsen des Manipulators genutzt werden. Daher kann sich der Bremsweg verlängern.

Die EP 1 186 386 A2 schlägt vor, kooperierende Roboter synchron alle in demselben Modus stillzusetzen, wobei der Modus mit der höchsten Priorität gewählt wird, wenn in verschiedenen Robotern unterschiedliche Stop-Ursachen auftreten.

Die DE 103 24 627 A1 offenbart ein Verfahren nach dem Oberbegriff des Anspruchs 1. Sie lehrt, bei einem Eindringen eines Objektes in eine Schutzzone eines Roboters einen Nothalt durchzuführen. Um diese Schutzzone erstreckt sich eine Überwachungs- und eine Warnzone, deren Ausdehnung in Abhängigkeit von der Geschwindigkeit des Roboters festgelegt wird. Dringt ein Objekt in die Überwachungs- oder Warnzone ein, erfolgt eine Schutzreaktion, insbesondere ein Ausweichen bzw. eine Geschwindigkeitsreduktion des Roboters, um ein Eindringen des Objektes in die Schutzzone und damit den Nothalt zu vermeiden.

In P. Kazanzides et al., "An Integraded System for Cementless Hip Replacement", IEEE Eng. In Medicine&Biology 14(1995), Nr. 3, Seiten 307-313 wird für das ROBODOC-System eine Sicherheitsüberwachung vorgeschlagen, die bei Überschreiten eines niedrigeren PAUSE-Grenzwertes ein manipulatorgeführtes chirurgisches Schneidwerkzeug abschaltet und einen Halt aller Manipulatorbewegungen kommandiert, und bei Überschreiten eines höheren STOP-Grenzwertes über Hardware-Relais die Energiezufuhr zu dem Manipulator und dem Werkzeug unterbricht.

Aufgabe der vorliegenden Erfindung ist es, wenigstens einen der vorgenannten Nachteile zu reduzieren und eine verbesserte Überwachung einer Sicherheitsfunktion eines Manipulators zur Verfügung zu stellen.

Diese Aufgabe wird durch ein Verfahren mit den Merkmalen des Anspruchs 1 gelöst. Anspruch 6 stellt eine Vorrichtung, Anspruch 7 bzw. 8 ein Computerprogramm bzw. ein Computerprogrammprodukt zur Durchführung eines Verfahrens nach Anspruch 1 unter Schutz. Die Unteransprüche betreffen vorteilhafte Weiterbildungen.

Der vorliegenden Erfindung liegt die Idee zugrunde, bei einem Stillsetzen eines Manipulators aufgrund einer nicht mehr erfüllten Sicherheitsfunktion daraufhin zu differenzieren, ob es sich um eine Fehlfunktion des Manipulators selber handelt, seine Steuerung bzw. Regelung oder Antriebe also nicht mehr korrekt arbeiten und daher auch nicht mehr zuverlässig zum Abbremsen genutzt werden können, oder ob der Manipulator als solcher fehlerfrei arbeitet und die Sicherheitsüberwachung beispielsweise durch ein externes Ereignis, etwa einen Bediener ausgelöst wurde - in einem solchen Fall kann der an sich fehlerfreie Manipulator durch entsprechende Ansteuerung seiner Antriebe schneller und/oder bahnnäher stillgesetzt werden. Diese Differenzierung erfolgt anhand des Überwachens einer Zustandsgröße des Manipulators.

Erfindungsgemäß wird vorgeschlagen, eine Zustandsgröße des Manipulators und zusätzlich eine hiervon verschiedene Sicherheitsfunktion des Manipulators zu überwachen und den Manipulator in einem ersten Modus stillzusetzen, wenn die überwachte Sicherheitsfunktion nicht erfüllt ist und die überwachte Zustandsgröße in einem ersten Bereich liegt. Ist die überwachte Sicherheitsfunktion nicht erfüllt, während jedoch die überwachte Zustandsgröße in einem zweiten, anderen Bereich liegt, wird der Manipulator in einem von dem ersten Modus verschiedenen zweiten Modus stillgesetzt.

Durch ein erfindungsgemäßes Verfahren bzw. eine erfindungsgemäße Vorrichtung wird einerseits ein zuverlässiges Stillsetzen des Manipulators gewährleistet, selbst wenn eine Sicherheitsfunktion nicht erfüllt ist. Auf der anderer Seite kann hierauf angemessen reagiert werden. Liegt beispielsweise keine Fehlfunktion des Manipulators selber vor, können seine Antriebe genutzt werden, um ihn schneller und/oder bahnnäher bzw. bahntreu stillzusetzten.

Insbesondere, um bei einer Fehlfunktion des Manipulators ein sicheres Stillsetzen zu gewährleisten, wird in einer bevorzugten Ausführung im ersten Modus eine Energieversorgung von Antrieben des Manipulators unverzüglich unterbrochen, insbesondere ein Stop 0 entsprechend der EN 60204 durchgeführt. Dabei kann gleichermaßen eine sogenannte Kurzschlussbremsung durchgeführt werden, bei der noch im Manipulator, insbesondere seinen Antrieben vorhandene Restenergie entladen wird, so dass beispielsweise Elektromotoren stromlos werden, oder es kann eine sogenannte bahnnahe Bremsung durchgeführt werden, bei der die noch im Manipulator, insbesondere seinen Antrieben vorhandene Restenergie genutzt wird, um mit den Antrieben zu bremsen, so dass die Abweichung von der Sollbahn bzw. - position während des Stillsetzens verringert wird.

In beiden Fällen kann zusätzlich mechanisch gebremst werden. Hierzu können beispielsweise aktiv gelüftete mechanisch Bremsen vorgesehen sein, die bei Unterbrechung ihrer Energieversorgung einfallen, etwa elektromagnetisch gelüftete Bremsen.

Insbesondere, wenn die Nichterfüllung der Sicherheitsüberwachung nicht auf eine Fehlfunktion des Manipulators zurückzuführen ist, wird in einer bevorzugten Ausführung im zweiten Modus eine Energieversorgung von Antrieben des Manipulators erst nach einer gewissen Zeitdauer unterbrochen, während der der Manipulator noch durch von der Energieversorgung versorgte Antriebe gebremst wird, insbesondere ein Stop 1 entsprechend der EN 60204 durchgeführt. Auf diese Weise kann der an sich ordnungsgemäß funktionierende Manipulator schneller und/oder bahnnäher bzw. bahntreu stillgesetzt werden. Beispielsweise können, sobald eine Sicherheitsfunktion nicht mehr erfüllt ist, während jedoch die überwachte Zustandsgröße in einem zweiten Bereich liegt, zunächst während einer vorgegebenen Zeitdauer Antriebe des Manipulators, die während dieser Zeitdauer weiterhin mit der Energieversorgung verbunden sind, mit entsprechend hoher Leistung eine Stopprampe abfahren. Hierzu werden beispielsweise die Antriebe so angesteuert, dass sie ein Drehmoment erzeugen, welches der Bewegung der von ihnen angetriebenen Gelenke des Manipulators entgegengesetzt gerichtet ist.

Nach dieser Zeitdauer wird dann die Energieversorgung des Manipulators unterbrochen. Auf diese Weise wird nach dem Stillsetzen ein sicherer Zustand des Manipulators erreicht. Bereits während dieser Zeitdauer und/oder anschließend, i.e. nach Unterbrechung der Energieversorgung können zusätzlich mechanische Bremsen aktiviert werden.

Alternativ wird im zweiten Modus die Energieversorgung von Antrieben des Manipulators auch nach dieser Zeitdauer nicht unterbrochen, insbesondere ein Stop 2 entsprechend der EN 60204 durchgeführt, so dass der Manipulator durch von der Energieversorgung versorgte Antriebe gebremst werden kann und anschließend voll funktionsfähig, vorteilhafterweise auf seiner Sollbahn, ist. Auf diese Weise kann die Wiederinbetriebnahme besonders rasch erfolgen. Auch hier können zusätzlich mechanische Bremsen aktiviert werden.

Die beiden vorgenannten Varianten können auch alternativ in Abhängigkeit von der überwachten Zustandsgröße durchgeführt werden, i.e. die Energieversorgung von Antrieben des Manipulators nach einer gewissen Zeitdauer unterbrochen werden, wenn die überwachte Sicherheitsfunktion nicht erfüllt ist und die überwachte Zustandsgröße in einem zweiten Bereich liegt, und die Energieversorgung von Antrieben des Manipulators auch nach dieser Zeitdauer nicht unterbrochen werden, wenn die überwachte Sicherheitsfunktion nicht erfüllt ist und die überwachte Zustandsgröße in einem von dem ersten und zweiten Bereich verschiedenen dritten Bereich liegt. In diesem Fall wird der Manipulator also in einem dritten Modus stillgesetzt, wenn die überwachte Sicherheitsfunktion nicht erfüllt ist und die überwachte Zustandsgröße in dem dritten Bereich liegt.

Auf diese Weise kann die Reaktion der Sicherheitsüberwachung noch feiner auf den aktuellen Störfall abgestimmt und der Manipulator beispielsweise bei einer eigenen Fehlfunktion unverzüglich von der Energieversorgung getrennt werden, bei einer Fehlfunktion in Peripheriegeräten wie Sensoren, Werkzeugen, Bussystemen oder dergleichen erst aktiv durch seine Antriebe abgebremst und anschließend aus Sicherheitsgründen von der Energieversorgung getrennt werden, und bei einer in einen Arbeitsraum des Manipulators eindringende Person aktiv durch seine Antriebe abgebremst werden und weiterhin voll funktionsfähig bleiben, um nach Freiwerden des Arbeitsbereiches rasch wieder den Betrieb aufzunehmen.

Um zu entscheiden, in welchem Modus der Manipulator stillzusetzten ist, wird erfindungsgemäß eine von der Sicherheitsfunktion des Manipulators verschiedene Zustandsgröße des Manipulators überwacht, i.e. bestimmt, ob sie in einem ersten oder zweiten oder gegebenenfalls dritten Bereich liegt. Diese Zustandsgröße des Manipulators kann eine Position, eine Geschwindigkeit, eine Beschleunigung und/oder eine höhere Ableitung der Position des Manipulators nach der Zeit umfassen. Als Position des Manipulators wird dabei insbesondere die Stellung einer oder mehrerer, insbesondere aller Gelenke des Manipulators und/oder seine Pose im kartesischen Raum, i.e. Lage und/oder Orientierung von einem oder mehreren, insbesondere allen Gliedern des Manipulators bezeichnet, wobei Gelenkstellungen durch die Vorwärtskinematik in die zugehörige Pose des Manipulators transformiert bzw. zu nicht-singulären Posen durch Lösen der Rückwärtskinematik die zugehörigen Gelenkstellungen bestimmt werden können. Insbesondere kann die Position des Manipulators die Lage und/oder Orientierung seines Werkzeugreferenzkoordinatensystems ("Tool Center Point" TCP) umfassen.

In entsprechender Weise kann die Geschwindigkeit des Manipulators eine oder mehrere Gelenkgeschwindigkeiten, beispielsweise Drehzahlen, und/oder eine oder mehrere Gliedgeschwindigkeiten im kartesischen Raum, beispielsweise die Geschwindigkeit des TCPs umfassen. Gleiches gilt analog für höhere Zeitableitungen wie Beschleunigung, Ruck und dergleichen.

Umfasst die Zustandsgröße eine Position, Geschwindigkeit, Beschleunigung oder eine höhere Ableitung der Position des Manipulators nach der Zeit, so kann der erste, der zweite und gegebenenfalls der dritte Bereich entsprechend vorgegebene Positionen, Geschwindigkeiten, Beschleunigungen bzw. höhere Ableitungen umfassen, bei denen der Manipulator im ersten, zweiten oder gegebenenfalls dritten Modus stillgesetzt werden soll.

So kann nach einer Ausführung der vorliegenden Erfindung der erste Bereich den sogenannten Schutzbereich umfassen, der für Bedienpersonen oder dergleichen vorgesehen ist und in den der Manipulator bei fehlerfreier Funktion nicht eintreten darf. Der zweite oder dritte Bereich kann den sogenannten Arbeitsbereich umfassen, der für Bedienpersonen gesperrt ist und in dem der Manipulator sich bei fehlerfreier Funktion bewegt. Der zweite Bereich kann auch den sogenannten Bremsbereich umfassen, der zwischen erstem und drittem Bereich liegt. Diese Bereiche können, wie sich aus vorstehender Erläuterung zur Vorwärts-Rückwärtskinematik ergibt, sowohl im Koordinaten- oder Achsraum als auch im kartesischen Raum definiert sein.

Umfasst bei dieser Ausführung das Überwachen einer Sicherheitsfunktion eine Raumüberwachung des Manipulators, und ist diese Sicherheitsfunktion nicht mehr erfüllt, kann dies verschiedene Ursachen haben: zum einen kann eine Fehlfunktion des Manipulators selber vorliegen, beispielweise ein Fehler in seiner Steuerung, so dass er den Arbeitsbereich verlässt und in den Schutzbereich eintritt. In diesem Fall kann nicht sicher davon ausgegangen werden, dass die Antriebe des Manipulators korrekt ansteuerbar sind, um den Manipulator abzubremsen und stillzusetzen. Daher wird, wenn sich aus der Zustandsgröße Manipulatorposition eine Position im Schutzbereich ergibt, beispielsweise ein Stop 0 durchgeführt.

Wird hingegen die Raumüberwachung durch eine Bedienperson ausgelöst, die in den Brems- oder Arbeitsbereich eintritt, so funktioniert der Manipulator an sich fehlerfrei, so dass seine Antriebe zum Bremsen genutzt werden können, um ihn rascher und/oder bahnnäher, insbesondere bahntreu stillzusetzen. Daher wird, wenn sich aus der Zustandsgröße Manipulatorposition eine Position im Arbeitsbereich ergibt, beispielsweise ein Stop 2 durchgeführt, so dass der weiterhin mit der Energieversorgung verbundenen Manipulator schnell und bahntreu stillgesetzt werden kann und, nachdem die Person den Arbeitsbereich verlassen hat, rasch wieder den Betrieb aufnehmen kann.

Zusätzlich oder alternativ kann die Zustandsgröße des Manipulators auch eine Aktivierung einer Sicherheitsfunktionsüberwachung umfassen, insbesondere einen zeitlichen oder situativen Zusammenhang mit einer Manipulatorposition oder - bewegung. Hierdurch kann differenziert werden, ob der Manipulator eine bereits überwachte Sicherheitsfunktion nicht mehr erfüllt oder bereits bei Aktivierung der Sicherheitsfunktionsüberwachung diese Sicherheitsfunktion nicht erfüllt.

Wenn beispielsweise eine Raumüberwachung aktiviert wird, obwohl der Manipulator sich in einem von dieser überwachten Schutzbereich befindet bzw. nicht in einem von dieser überwachten Arbeitsbereich aufhält, wenn eine Stillstandsüberwachung aktiviert wird, obwohl der Manipulator sich gerade bewegt, oder wenn eine Geschwindigkeits- oder Beschleunigungsüberwachung aktiviert wird, obwohl der Manipulator sich gerade mit einer höheren Geschwindigkeit bzw. Beschleunigung bewegt, die über einer in der Sicherheitsfunktionsüberwachung zugelassenen Geschwindigkeits- bzw. Beschleunigungsgrenze liegt, so erfüllt der Manipulator bereits bei Aktivierung der Sicherheitsfunktionsüberwachung die überwachte Sicherheitsfunktion nicht, ohne dass es sich dabei um eine Fehlfunktion des Manipulators handelt. In diesem Fall können daher die Antriebe des Manipulators zum Abbremsen genutzt werden und daher wenigstens für eine bestimmte Zeitdauer mit der Energieversorgung verbunden bleiben.

Beginnt der Manipulator hingegen bei bereits aktivierter Stillstandsüberwachung, sich zu bewegen, tritt der Manipulator bei bereits aktivierter Raumüberwachung in den Schutzbereich ein bzw. aus dem Arbeitsbereich aus, oder überschreitet der Manipulator erst nach Aktivierung einer Geschwindigkeits- bzw. Beschleunigungsüberwachung eine Geschwindigkeits- bzw. Beschleunigungsgrenze, so handelt es sich um eine Fehlfunktion, so dass eine zuverlässige Abbremsung durch seine Antriebe nicht mehr gewährleistet ist. In diesem Fall ist es daher vorteilhaft, die Energieversorgung zu den Antrieben unverzüglich zu unterbrechen und den Manipulator durch Reibung, mechanische Bremsen und/oder die Restenergie in den Antrieben stillzusetzen.

In einer Ausführung der vorliegenden Erfindung umfasst die Zustandsgröße einen zeitlichen Abstand zwischen einer Aktivierung der Sicherheitsfunktionsüberwachung, beispielsweise durch eine Bedienperson, eine Manipulator- oder eine Prozesssteuerung, und der Feststellung, dass die überwachte Sicherheitsfunktion nicht erfüllt ist, insbesondere dem Zeitpunkt, in dem die Sicherheitsfunktionsüberwachung dies feststellt. Bevorzugt sind der erste und zweite Bereich in diesem Fall so definiert, dass:
- die Zustandsgröße im ersten Bereich liegt, wenn die Aktivierung der Sicherheitsfunktionsüberwachung, vorzugsweise deutlich, vordem Zeitpunkt erfolgte, in dem die Sicherheitsfunktionsüberwachung feststellt, dass die überwachte Sicherheitsfunktion nicht erfüllt ist, insbesondere also wenn ein zeitlicher Abstand von der Aktivierung der Sicherheitsfunktionsüberwachung bis zu dem Zeitpunkt, in dem die Sicherheitsfunktionsüberwachung feststellt, dass die überwachte Sicherheitsfunktion nicht erfüllt ist, größer als ein vorgegebener, vorzugsweise kurzer, Grenzzeitraum ist; und
- die Zustandsgröße im zweiten Bereich liegt, wenn bereits bei oder unmittelbar nach Aktivierung festgestellt wird, dass die überwachte Sicherheitsfunktion nicht erfüllt ist, insbesondere der zeitliche Abstand kleiner oder gleich dem vorgegebenen Grenzzeitraum ist.

Ein solcher Zusammenhang kann bevorzugt mittels Zustandsautomat überwacht werden.

Zusätzlich oder alternativ kann die Zustandsgröße des Manipulators auch ein Busfehlersignal umfassen. Tritt in einem Bus, über den der Manipulator mit seiner Steuerung, einer darin implementierten oder separat ausgebildeten Sicherheitsfunktionsüberwachungseinrichtung, einer Prozesssteuerung oder dergleichen kommuniziert, ein Fehler auf, so führt dies bei herkömmlichen Manipulatoren dazu, dass eine überwachte Sicherheitsfunktion als nicht mehr erfüllt bestimmt und ein Stop 0 durchgeführt wird, obwohl der Manipulator als solcher fehlerfrei funktioniert, so dass seine Antriebe zum Abbremsen genutzt werden könnten.

Gemäß einer Ausführung der vorliegenden Erfindung sind daher der erste und zweite Bereich so definiert, dass die überwachte Zustandsgröße im ersten Bereich liegt, wenn kein Busfehlersignal vorliegt, welches einen Fehler eines Bussystems anzeigt, und im zweiten Bereich liegt, wenn ein solches Signal vorliegt. Somit wird, wenn ein Busfehler vorliegt, der durch ein Busfehlersignal angezeigt wird und beispielsweise eine Sicherheitsfunktionsüberwachung auslöst, der Manipulator im zweiten Modus stillgesetzt, beispielsweise ein Stop 1 oder Stop 2 ausgeführt. Liegt hingegen kein Busfehler und somit auch kein Busfehlersignal vor, wird davon ausgegangen, dass die nicht mehr erfüllte Sicherheitsfunktion auf eine Fehlfunktion des Manipulators zurückgeht, und ein Stop 0 durchgeführt.

Vorteilhafterweise wird eine solche Busfehlerüberwachung zeitlich vorab durchgeführt, d.h. zuerst geprüft, ob ein Busfehlersignal vorliegt. Wenn ein Busfehler vorliegt, wird der Manipulator im zweiten Modus stillgesetzt, beispielsweise ein Stop 1 oder Stop 2 ausgeführt. Liegt hingegen kein Busfehler und somit auch kein Busfehlersignal vor, wird wie vorstehend beschrieben der Manipulator im ersten Modus stillgesetzt wird, wenn eine weitere überwachte Zustandsgröße im ersten Bereich liegt und im zweiten Modus stillgesetzt, wenn diese überwachte Zustandsgröße in einem zweiten Bereich liegt, wenn eine überwachte Sicherheitsfunktion nicht erfüllt ist.

Das Überwachen einer Sicherheitsfunktion kann eine Geschwindigkeits- und/oder Beschleunigungsüberwachung, insbesondere im kartesischen und/oder im Koordinatenraum des Manipulators umfassen. Bevorzugt ist die Sicherheitsfunktion dann so definiert, dass sie dann nicht erfüllt ist, wenn eine Geschwindigkeit bzw. Beschleunigung des Manipulators einen vorgegebenen Grenzwert überschreitet. Dabei bezeichnet die Geschwindigkeit die zeitliche Änderung bzw. Zeitableitung der Position, wie sie vorstehend definiert wurde, also insbesondere die Geschwindigkeit in einem oder mehreren Gelenken des Manipulators und/oder seine Geschwindigkeit im kartesischen Raum, i.e. Lage- und/oder Orientierungsänderung von einem oder mehreren Gliedern des Manipulators. Gleiches gilt analog für die Beschleunigung oder höhere Zeitableitungen, die ebenfalls durch eine entsprechende Sicherheitsfunktionsüberwachung überwacht werden können.

Zusätzlich oder alternativ kann das Überwachen einer Sicherheitsfunktion eine Stillstandsüberwachung des Manipulators umfassen. Bevorzugt ist die Sicherheitsfunktion dann so definiert, dass sie dann nicht erfüllt ist, wenn die Abweichung zwischen der Position des Manipulators und einer Stillstands-Referenzposition einen Grenzwert übersteigt und/oder eine Geschwindigkeit des Manipulators einen, vorzugsweise kleinen, Grenzwert übersteigt.

Zusätzlich oder alternativ kann das Überwachen einer Sicherheitsfunktion eine Schutz- und/oder Arbeitsbereichsüberwachung des Manipulators umfassen. Hierzu wird ein Arbeits- bzw. Schutzbereich des Manipulators durch eine Detektionseinrichtung überwacht, die elektromagnetische Strahlung, insbesondere sichtbares Licht, ultraviolettes Licht, Infrarotlicht, Radarstrahlung, Wärmestrahlung oder dergleichen empfängt und hieraus Objekte im überwachten Raum erfasst. Zusätzlich oder alternativ wird ein Arbeitsbereich durch eine Detektionseinrichtung überwacht, die ein Öffnen eines Zugangs zum Arbeitsbereich, beispielsweise einer Tür einer umgitterten Roboterzelle, erfasst. Bevorzugt ist die Sicherheitsfunktion dann so definiert, dass sie dann nicht erfüllt ist, wenn die Raumüberwachung ein unzulässiges Objekt im Arbeitsbereich oder die Anwesenheit des Manipulators im Schutzbereich erfasst.

Zusätzlich oder alternativ kann das Überwachen einer Sicherheitsfunktion eine Werkzeugüberwachung des Manipulators umfassen. Die Sicherheitsfunktion ist dann so definiert, dass sie dann nicht erfüllt ist, wenn eine entsprechende Detektionseinrichtung erfasst, dass ein Werkzeug des Manipulators nicht vorhanden ist oder nicht fehlerfrei funktioniert. Eine Werkzeugüberwachung kann dabei gleichermaßen manipulator- und/oder prozessbasiert erfolgen. Bei einer manipulatorbasierten Werkzeugüberwachung wird erfasst, ob bzw. welches Werkzeug am Manipulator vorhanden ist. Bei einer prozessbasierten Werkzeugüberwachung wird durch eine Prozessteuerung erfasst, welches Werkzeug am Manipulator vorhanden sein muss.

Erkennt eine Sicherheitsfunktionsüberwachung, dass eine oder mehrere der vorstehend exemplarisch erläuterten oder andere Sicherheitsfunktionen nicht erfüllt ist, soll der Manipulator stillgesetzt werden. Erfindungsgemäß wird dabei auf Basis wenigstens einer der vorstehend exemplarisch erläuterten oder anderer Zustandsgrößen differenziert, ob dies in einem ersten oder einem zweiten Modus erfolgen soll. So kann beispielsweise ein Stop 0 durchgeführt werden, wenn anhand der überwachten Zustandsgröße erkannt wird, dass eine Fehlfunktion des Manipulators vorliegt, so dass seine Antriebe nicht mehr zuverlässig zum Abbremsen eingesetzt werden sollen. Andererseits kann beispielsweise ein Stop 1 oder 2 durchgeführt werden, wenn eine Sicherheitsfunktionen nicht erfüllt ist, obwohl der Manipulator als solcher fehlerfrei funktioniert, wenn also beispielsweise eine Person in einen überwachten Arbeitsbereich eintritt, eine Sicherheitsfunktionsüberwachung während des diese Sicherheitsfunktion nicht erfüllenden Betriebs aktiviert wird, oder ein Busfehler vorliegt.

Weitere Vorteile und Merkmale ergeben sich aus den Unteransprüchen und den Ausführungsbeispielen. Hierzu zeigt, teilweise schematisiert:
- Fig. 1:: einen Roboter während einer Überwachung nach einer Ausführung der vorliegenden Erfindung; und
- Fig. 2:: den Ablauf der Überwachung in Fig. 1.

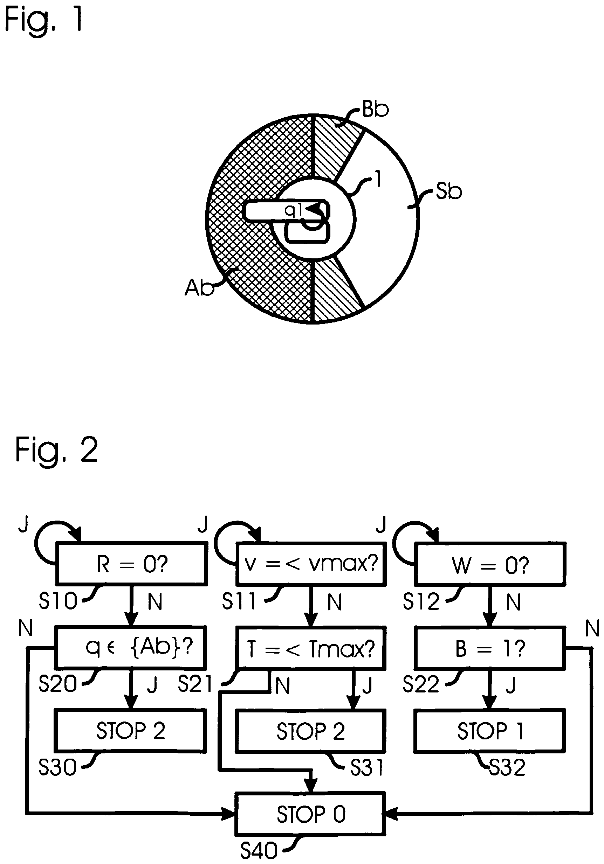

Fig. 1 zeigt in der Draufsicht einen Knickarmroboter 1 in einer Roboterzelle mit einem kreuzschraffierten Arbeitsbereich Ab, einem sich daran anschließenden, schraffiert dargestellten Bremsbereich Bb und einem durch den Bremsbereich Bb vom Arbeitsbereich Ab getrennten Schutzbereich Sb. Bedienpersonen dürfen sich im Schutzbereich Sb aufhalten, in den der Roboter 1 bei fehlerfreier Funktion nicht eintritt. Umgekehrt ist der Zutritt zum Arbeitsbereich Ab, in dem der Roboter sich im Betrieb, beispielsweise bei einem Montage- oder Schweißprozess sehr rasch bewegt, aus Sicherheitsgründen verboten.

Hierzu ist in nicht näher dargestellter Weise eine Raumüberwachung vorgesehen, die beispielsweise visuell den Arbeits- und den Schutzbereich überwacht, ein Öffnen von Schutztüren zur Roboterzelle (nicht dargestellt) registriert oder dergleichen. Erfasst diese Raumüberwachung eine Verletzung des Schutz- oder Arbeitsbereiches durch den Roboter bzw. eine Person oder dergleichen, setzt sie einen Raumüberwachungskennzeichner R auf einen dies anzeigenden Wert R = 1, andernfalls auf einen Wert R = 0, der anzeigt, dass Schutz- und Arbeitsbereich nicht verletzt sind.

Zusätzlich ist in der Steuerung des Roboters 1 eine Geschwindigkeitsüberwachung implementiert, die aus der zeitlichen Veränderung der Gelenkwinkel q des Roboters 1 durch Lösen der Vorwärtskinematik eine Geschwindigkeit v des TCPs des Roboters 1 im kartesischen Raum bestimmt. Exemplarisch ist hierzu in Fig. 1 der Gelenkwinkel q1 um die Karussellachse eingezeichnet.

Weiterhin ist eine Werkzeugüberwachung vorgesehen, die - beispielsweise durch elektrischen Kontakt - erfasst, ob ein bzw. das richtige Werkzeug vorhanden ist oder nicht. Verliert der Roboter 1 fehlerhaft während des Betriebs das Werkzeug, so setzt die Werkzeugüberwachung einen Werkzeugüberwachungskennzeichner W auf einen dies anzeigenden Wert W = 1, andernfalls auf einen Wert W = 0, der anzeigt, dass das Werkzeug vorhanden ist.

Fig. 2 zeigt den Ablauf einer Überwachung des Roboters 1 nach einer Ausführung der vorliegenden Erfindung. Hierbei werden parallel, wie in Fig. 2 angedeutet, oder sequentiell drei Sicherheitsfunktionen überwacht.

In einem ersten Schritt S10 wird überprüft, ob eine Raumüberwachungssicherheitsfunktion erfüllt ist, i.e. ob der Raumüberwachungskennzeichner R den Wert 0 aufweist, der anzeigt, dass Schutz- und Arbeitsbereich nicht verletzt sind. Ist diese Sicherheitsfunktion erfüllt (S10: "J"), kehrt die Überwachung zu Schritt S10 zurück, i.e. überprüft weiterhin den Raumüberwachungskennzeichner R, wie in Fig. 2 durch den kreisförmigen Pfeil angedeutet.

Hat hingegen die Raumüberwachung eine Verletzung des Schutz- oder Arbeitsbereiches erfasst, i.e. weist der Raumüberwachungskennzeichner R den Wert 1 auf (S10: "N"), prüft die Überwachung in einem zweiten Schritt S20, ob die Position des Roboters 1, beschrieben durch seine Gelenkwinkel q, im Arbeitsbereich Ab liegt. Hierzu überwacht sie die Zustandsgröße Manipulatorposition q.

Ist dies der Fall (S20: "J"), wird davon ausgegangen, dass die Bereichsverletzung nicht auf einer Fehlfunktion des Roboters 1 beruht, der etwa fehlerhaft in den Schutzbereich eingetreten ist, sondern beispielsweise durch eine Person, die unerlaubt in den Arbeitsbereich eingetreten ist. Daher können die Antriebe des korrekt funktionierenden Roboters 1 genutzt werden, um diesen schnellstmöglich stillzusetzen. Daher wird in einem dritten Schritt S30 ein Stop 2 ausgeführt, bei dem die Antriebe mit der Energieversorgung verbunden bleiben und eine verkürzte Stopprampe abfahren. So kann gleichermaßen der Roboter 1 schnellstmöglich abgebremst und die Gefahr einer Verletzung der Person verringert werden, und andererseits der Roboter 1 bahntreu stillgesetzt werden, so dass er bei Wiederinbetriebnahme (nachdem die Person den Arbeitsbereich verlassen hat) seine Sollbahn rasch fortsetzen kann.

Stellt die Überwachung hingegen fest, dass sich der Roboter nicht im Arbeitsbereich befindet (S20: "N"), deutet dies auf eine Fehlfunktion des Roboters hin. In diesem Fall sollte die Steuerung, deren korrekte Funktion nicht mehr gewährleistet ist, nicht zum Bremsen verwendet werden. Daher wird in diesem Fall in einem vierten Schritt S40 ein Stop 0 durchgeführt, bei dem die Energieversorgung zu den Antrieben unverzüglich unterbrochen und der Roboter 1 durch hierbei automatisch einfallende mechanischen Bremsen stillgesetzt wird. Dabei weicht er jedoch von seiner Sollbahn ab und muss nach Wiederinbetriebnahme erst auf diese zurückpositioniert werden.

Parallel zum ersten Schritt S10 überprüft die Überwachung in einem fünften Schritt S11, ob eine Geschwindigkeitsüberwachungssicherheitsfunktion erfüllt ist, i.e. die Geschwindigkeit v des TCPs des Roboters 1 unterhalb einer vorgegebenen Maximalgeschwindigkeit liegt. Ist dies der Fall (S11: "J"), kehrt die Überwachung zu Schritt S11 zurück, wie in Fig. 2 durch den kreisförmigen Pfeil angedeutet.

Hat hingegen die Geschwindigkeitsüberwachung eine Überschreitung der maximal zulässigen Geschwindigkeit erfasst (S10: "N"), prüft die Überwachung in einem sechsten Schritt S21, ob die Zeit T, die zwischen der Aktivierung der Geschwindigkeitsüberwachung und dem Zeitpunkt vergangen ist, zu dem eine Überschreitung der maximal zulässigen Geschwindigkeit erfasst worden ist, größer als ein Grenzzeitraum Tmax ist.

Ist dies nicht der Fall (S21: "J"), wird davon ausgegangen, dass die Verletzung der Geschwindigkeitssicherheitsfunktion nicht auf einer Fehlfunktion des Roboters 1 beruht, der sich zu schnell bewegt, sondern beispielsweise darauf, dass die Geschwindigkeitsüberwachung mit einer maximal zulässigen Geschwindigkeit aktiviert wurde, die der Roboter bereits zu diesem Zeitpunkt oder unmittelbar darauf überschritten hat. Daher können wiederum die Antriebe des korrekt funktionierenden Roboters 1 genutzt werden, in einem siebten Schritt S31 wird ein Stop 2 ausgeführt.

Stellt die Überwachung hingegen fest, dass zwischen der Aktivierung der Geschwindigkeitsüberwachung und dem Zeitpunkt, zu dem eine Überschreitung der maximal zulässigen Geschwindigkeit erfasst worden ist, ein Zeitraum vergangen ist, der größer als der Grenzzeitraum ist (S21: "N"), deutet dies wiederum auf eine Fehlfunktion des Roboters hin. Daher wird auch in diesem Fall ein Stop 0 durchgeführt (S40).

Parallel zum ersten Schritt S10 und fünften Schritt S11 überprüft die Überwachung in einem achten Schritt S12, ob eine Werkzeugüberwachungssicherheitsfunktion erfüllt ist, d.h. ob der Werkzeugüberwachungskennzeichner W den Wert 0 aufweist, der anzeigt, dass das Werkzeug vorhanden ist. Ist diese Sicherheitsfunktion erfüllt (S12: "J"), kehrt die Überwachung zu Schritt S12 zurück, i.e. überprüft weiterhin den Werkzeugüberwachungskennzeichner W, wie in Fig. 2 durch den kreisförmigen Pfeilangedeutet.

Hat hingegen die Werkzeugüberwachung einen Verlust des Werkzeuges erfasst (S12: "N"), prüft die Überwachung in einem neunten Schritt S22, ob ein Busfehlersignal B = 1 vorliegt, das anzeigt, dass ein Busfehler vorliegt.

Ist dies der Fall (S22: "J"), wird davon ausgegangen, dass die Verletzung der Werkzeugsicherheitsfunktion nicht auf einer Fehlfunktion des Roboters 1 beruht, der sein Werkzeug verloren hat, sondern darauf, dass Bussignale fehlerhaft sind und fälschlich einen Werkzeugverlust anzeigen. Daher wird in einem zehnten Schritt S32 ein Stop 1 ausgeführt, bei dem die Antriebe noch mit der Energieversorgung verbunden bleiben und in dieser Zeit eine verkürzte Stopprampe abfahren. Anschließend wird, um den Busfehler zu beheben, die Energieversorgung unterbrochen.

Stellt die Überwachung hingegen fest, dass kein Busfehler vorliegt (S22: "N"), bedeutet dies einen tatsächlichen Werkzeugverlust und damit eine Fehlfunktion des Roboters selber. Daher wird auch in diesem Fall ein Stop 0 durchgeführt (S40).

Im oben erläuterten Ausführungsbeispiel erfolgt die Busfehlerüberwachung in Schritt S22 zeitlich nach der Werkzeugüberwachung nach Schritt S12. In einer nicht dargestellten Abwandlung wird vorteilhaft Schritt S22 zeitlich vor den Schritten S10, S11 und S12 gemeinsam durchgeführt. D.h., es wird zunächst in Schritt S22 geprüft, ob ein Busfehler vorliegt, und in einem solchen Fall ein Stop 1 durchgeführt (S22: J"; S32). Liegt hingegen kein Busfehler vor (S22: "N"), werden anschließend parallel die Schritte S10, S11 und S12 wie vorstehend beschrieben durchgeführt. Dabei wird ein Stop 0 durchgeführt (S40), wenn in Schritt S12 ein Werkzeugverlust erfasst wurde (S12: "N"). Sind die Sicherheitsfunktionen hingegen erfüllt (S10, S11, S12: "J"), kehrt die Überwachung zum gemeinsamen, vorgelagerten Schritt S22 zurück, i.e. überprüft mögliche Busfehler.

### Bezugszeichenliste

- 1: Roboter
- Ab: Arbeitsbereich
- Bb: Bremsbereich
- Sb: Schutzbereich
- R: Raumüberwachungskennzeichner (R = 0: keine Verletzung)
- W: Werkzeugüberwachungskennzeichner (W = 0: Werkzeug vorhanden)
- q: Gelenkwinkel (q1: Karussellwinkel)
- v(max): (maximal zulässige) Geschwindigkeit des TCP
- T(max): (Grenz)Zeitraum
- B: Busfehlersignal (B = 1: Busfehler)
- STOP 0: Stop 0 nach EN 60204
- STOP 1: Stop 1 nach EN 60204
- STOP 2: Stop 2 nach EN 60204

## Patentansprüche

1. Verfahren zur Überwachung einer Sicherheitsfunktion eines Manipulators, insbesondere eines Roboters (1), mit den Schritten:
Überwachen einer Sicherheitsfunktion (R, v, W) des Manipulators (S10, S11, S12),
das eine Stillstandsüberwachung des Manipulators,
eine Geschwindigkeitsüberwachung (S11) des Manipulators,
eine Beschleunigungsüberwachung des Manipulators,
eine Schutz- und/oder Arbeitsbereichsüberwachung des Manipulators (S10) durch eine Detektionseinrichtung, die elektromagnetische Strahlung empfängt und
hieraus Objekte im überwachten Raum erfasst und/oder ein Öffnen eines Zugangs zum Arbeitsbereich erfasst, oder
eine Werkzeugüberwachung des Manipulators (S12) durch eine Detektionseinrichtung, die erfasst dass ein Werkzeug des Manipulators nicht vorhanden ist oder nicht fehlerfrei funktioniert, ist;
zusätzlich Überwachen einer von der Sicherheitsfunktion des Manipulators verschiedenen Zustandsgröße (q, T, B) des Manipulators (S20, S21, S22),
die eine Position (q), eine Geschwindigkeit, eine Beschleunigung oder eine höhere Ableitung der Position des Manipulators nach der Zeit,
ein zeitlicher Abstand (T) zwischen einer Aktivierung der
Sicherheitsfunktionsüberwachung und der Feststellung, dass die überwachte Sicherheitsfunktion nicht erfüllt ist; oder
ein Busfehlersignal (B) ist; und
Stillsetzen des Manipulators (S40) in einem ersten Modus (STOP 0), in dem eine Energieversorgung von Antrieben des Manipulators unverzüglich unterbrochen wird, wenn die überwachte Sicherheitsfunktion nicht erfüllt ist und die überwachte Zustandsgröße in einem ersten Bereich liegt (S40); und
Stillsetzen des Manipulators (S30, S31, S32) in einem von dem ersten Modus verschiedenen zweiten Modus (STOP 1, STOP 2), in dem der Manipulator durch von der Energieversorgung versorgte Antriebe gebremst wird, wenn die überwachte Sicherheitsfunktion nicht erfüllt ist und die überwachte Zustandsgröße in einem zweiten Bereich liegt,
wobei beim Stillsetzen aufgrund der nicht mehr erfüllten Sicherheitsfunktion anhand der Überwachung der Zustandsgröße daraufhin differenziert wird, ob es sich um eine Fehlfunktion des Manipulators handelt oder ob der Manipulator fehlerfrei funktioniert.

2. Verfahren nach Anspruch 1, **dadurch gekennzeichnet, dass** das Überwachen einer Sicherheitsfunktion eine Geschwindigkeitsüberwachung (S11) im kartesischen und/oder im Koordinatenraum des Manipulators umfasst.

3. Verfahren nach Anspruch 1, **dadurch gekennzeichnet, dass** im ersten Modus der Manipulator mechanisch und/oder durch mit Restenergie unabhängig von der Energieversorgung versorgte Antriebe gebremst wird.

4. Verfahren nach einem der vorhergehenden Ansprüche, **dadurch gekennzeichnet, dass** im zweiten Modus (STOP 1) eine Energieversorgung von Antrieben des Manipulators nach einer Zeitdauer unterbrochen wird, in der der Manipulator durch von der Energieversorgung versorgte Antriebe gebremst wird.

5. Verfahren nach einem der vorhergehenden Ansprüche 1 bis 3, **dadurch gekennzeichnet, dass** im zweiten Modus (STOP 2) eine Energieversorgung von Antrieben des Manipulators nicht unterbrochen und der Manipulator durch von der Energieversorgung versorgte Antriebe gebremst wird.

6. Vorrichtung für einen Manipulator, insbesondere einen Roboter (1), mit einer Überwachungseinrichtung zum Überwachen einer Zustandsgröße (q, T, B) des Manipulators, und einer Überwachungseinrichtung zum Überwachen einer Sicherheitsfunktion (R, v, W) des Manipulators und zum Stillsetzen des Manipulators, wenn die überwachte Sicherheitsfunktion nicht erfüllt ist,
**dadurch gekennzeichnet, dass**
die Überwachungseinrichtung zum Überwachen einer Sicherheitsfunktion und zum Stillsetzen des Manipulators zur Durchführung eines Verfahrens nach einem der vorhergehenden Ansprüche eingerichtet ist.

7. Computerprogramm, dass ein Verfahren nach einem der Ansprüche 1 bis 5 ausführt, wenn es in einer Vorrichtung nach Anspruch 6 abläuft.

8. Computerprogrammprodukt mit Programmcode, der auf einem maschinenlesbaren Träger gespeichert ist und ein Computerprogramm nach Anspruch 7 umfasst.

## Claims

1. A method of monitoring a safety function of a manipulator, in particular of a robot (1), comprising the steps of:
monitoring a safety function (R, v, W) of the manipulator (S10, S11, S12) which comprises
a standstill monitoring of the manipulator,
a speed monitoring (S11) of the manipulator,
an acceleration monitoring of the manipulator,
a safety zone monitoring and/or work zone monitoring of the manipulator (S10) by means of a detection device which receives electromagnetic radiation and detects objects in the monitored space based thereupon and/or detects an opening of an access to the work zone, or
a tool monitoring of the manipulator (S12) by means of a detection device which detects the absence of a tool of the manipulator or a malfunction of a tool of the manipulator;
additionally monitoring a state parameter (q, T, B) of the manipulator (S20, S21, S22) different from the safety function of the manipulator, which state parameter is a position (q), a speed, an acceleration or a higher-order derivative of the position of the manipulator with respect to time,
a time interval (T) between an activation of the safety function monitoring and the determination that the safety function that is being monitored is not valid; or
a bus fault signal (B); and
halting the manipulator (S40) in a first mode (STOP 0) in which an energy supply of the drives of the manipulator is immediately interrupted if the safety function which is being monitored is not valid and the state parameter that is being monitored lies within a first range (S40); and
halting the manipulator (S30, S31, S32) in a second mode (STOP 1, STOP 2) different from the first mode, in which second mode the manipulator is slowed down by means of drives which are supplied with energy from the energy supply if the safety function which is being monitored is not valid and the state parameter which is being monitored lies within a second range,
wherein, in connection with the halting because of the safety feature which is no longer valid, a distinction is made, on the basis of the monitoring of the state parameter, as to whether there is a malfunction of the manipulator or whether the manipulator functions without fault.

2. The method according to claim 1, **characterized in that** the monitoring of the safety function comprises a monitoring (S11) of a speed in the Cartesian coordinate system and/or in the coordinate system of the manipulator.

3. The method according to claim 1, **characterized in that**, in the first mode, the manipulator is slowed down mechanically and/or by means of drives supplied with remaining energy independent from the energy supply.

4. The method according to any one of the preceding claims, **characterized in that**, in the second mode (STOP 1), a supply of energy to the drives of the manipulator is interrupted after a time period during which the manipulator is slowed down by means of drives supplied with energy from the energy supply.

5. The method according to any one of the preceding claims 1 to 3, **characterized in that**, in the second mode (STOP 2), a supply of energy to the drives of the manipulator is not interrupted and the manipulator is slowed down by means of drives supplied with energy from the energy supply.

6. An apparatus for a manipulator, in particular a robot (1), comprising a monitoring device for monitoring a state parameter (q, T, B) of the manipulator, and a monitoring device for monitoring a safety function (R, v, W) of the manipulator and for halting the manipulator if the safety function which is being monitored is not valid,
**characterized in that**
the monitoring device for monitoring a safety function and for halting the manipulator is arranged for carrying out a method according to any one of the preceding claims.

7. A computer program which carries out a method according to any one of the claims 1 to 5 when it is run on an apparatus according to claim 6.

8. A computer program product with program code which is stored on a machine-readable medium and which comprises a computer program according to claim 7.

## Revendications

1. Procédé de surveillance d'une fonction de sécurité d'un manipulateur, en particulier d'un robot (1), avec les étapes :
surveillance d'une fonction de sécurité (R, v, W) du manipulateur (S10, S11, S12), qui est
une surveillance d'arrêt du manipulateur,
une surveillance de vitesse (S11) du manipulateur,
une surveillance d'accélération du manipulateur,
une surveillance de zone de protection et/ou de travail du manipulateur (S10) par un système de détection qui reçoit un rayonnement électromagnétique et détecte à partir de ce dernier des objets dans l'espace surveillé et/ou détecte une ouverture d'un accès à la zone de travail, ou
une surveillance d'outil du manipulateur (S12) par un système de détection qui détecte qu'un outil du manipulateur n'est pas présent ou ne fonctionne pas correctement ;
en plus surveillance d'une grandeur d'état (q, T, B) du manipulateur (S20, S21, S22), différente de la fonction de sécurité du manipulateur, qui est une position (q),
une vitesse, une accélération ou une dérive plus élevée de la position du manipulateur selon le temps, un écart temporel (T) entre une activation de la surveillance de la fonction de sécurité et le fait de déterminer que la fonction de sécurité surveillée n'est pas satisfaite, ou
un signal d'erreur de bus (B) ; et
arrêt du manipulateur (S40) dans un premier mode (STOP 0),
dans lequel l'alimentation en énergie d'entraînements du manipulateur est immédiatement interrompue lorsque la fonction de sécurité surveillée n'est pas satisfaite et
que la grandeur d'état surveillée est située dans une première plage (S40) ; et
arrêt du manipulateur (S30, S31, S32) dans un second mode (STOP 1, STOP 2) différent du premier mode, dans lequel le manipulateur est freiné par des entraînements alimentés par l'alimentation en énergie lorsque la fonction de sécurité surveillée n'est pas satisfaite et que la grandeur d'état surveillée est située dans une seconde plage,
dans lequel, lors de l'arrêt en raison de la fonction de sécurité non satisfaite, on différencie à l'aide de la surveillance de la grandeur d'état s'il s'agit d'un dysfonctionnement du manipulateur ou si le manipulateur fonctionne correctement.

2. Procédé selon la revendication 1, **caractérisé en ce que** la surveillance d'une fonction de sécurité comporte une surveillance de vitesse (S11) dans l'espace de coordonnées cartésiennes et/ou dans l'espace de coordonnées du manipulateur.

3. Procédé selon la revendication 1, **caractérisé en ce que**, dans le premier mode, le manipulateur est freiné mécaniquement et/ou par des entraînements alimentés avec une énergie résiduelle indépendamment de l'alimentation en énergie.

4. Procédé selon l'une quelconque des revendications précédentes, **caractérisé en ce que**, dans le second mode (STOP 1), une alimentation en énergie d'entraînements du manipulateur est interrompue après une durée temporelle durant laquelle le manipulateur est freiné par des entraînements alimentés par l'alimentation en énergie.

5. Procédé selon l'une quelconque des revendications 1 à 3, **caractérisé en ce que**, dans le second mode (STOP 2), une alimentation en énergie d'entraînements du manipulateur n'est pas interrompue et le manipulateur est freiné par des entraînements alimentés par l'alimentation en énergie.

6. Dispositif pour un manipulateur, en particulier un robot (1), avec un système de surveillance pour la surveillance d'une grandeur d'état (q, T, B) du manipulateur et avec un système de surveillance pour la surveillance d'une fonction de sécurité (R, v, W) du manipulateur et pour l'arrêt du manipulateur lorsque la fonction de sécurité surveillée n'est pas satisfaite, **caractérisé en ce que**
le système de surveillance pour la surveillance d'une fonction de sécurité et pour l'arrêt du manipulateur est conçu pour l'exécution d'un procédé selon l'une quelconque des revendications précédentes.

7. Programme d'ordinateur, qui exécute un procédé selon l'une quelconque des revendications 1 à 5 lorsqu'il se déroule dans un dispositif selon la revendication 6.

8. Produit-programme d'ordinateur avec un code de programme, qui est stocké sur un support lisible par machine et comporte un programme d'ordinateur selon la revendication 7.
